# EUROPEAN PATENT APPLICATION

(11) **EP 4 726 986 A1**
(43) Date of publication of application: **15.04.2026**
(21) Application number: 24315463.0
(22) Date of filing: 09.10.2024
(51) Int. Cl.: H02M 1/12, H02M 1/15, H02M 1/42, H02M 1/44, H02M 1/10

(54) **VERSATILE GRID-TIED FOUR-PHASE UNIVERSAL CHARGER WITH ACTIVE RIPPLE CANCELLATION**

(71) Applicant: Watt & Well, 84120 Pertuis (FR)
(72) Inventor: Sakr, Nadim, 91300 MASSY (FR); Iglesias, Raul, 92160 ANTONY (FR)
(74) Representative: IXAS Conseil

(57) **Abstract**

A charger for charging the battery (B) of an electric vehicle from the grid (G), said charger being configured for being operated in at least two configurations for charging said battery from the grid G, said configurations being selected from single phase configuration, biphase configuration, three phase configuration with neutral and three-phase configuration without neutral, said charger comprising
- a first connector unit for connecting the charger to the grid (G),
- an AC/DC converter (75), comprising three or four legs, each leg comprising at least two switching devices in series, each leg being connected to a different phase line or neutral line originating from the grid side of said first connector,
- a set of filters (77) provided between said first connector unit and said AC/DC converter, said set of filters comprising, for each phase line and for the neutral line, at least a differential mode filter (81) and a common mode filter (80),
- a second connector unit for connecting the charger to the battery (B),
said charger being characterized in that it further comprises an additional switch (S) and a filter capacitor C_{AF}, said additional switch being configured to be capable of switching between two positions, namely
- a first position wherein said filter capacitor (C_{AF}) is put in series with the differential mode filter (81d) connected to a leg which is not used in the configured charger operation,
- a second position wherein said filter capacitor (C_{AF}) is disconnected from said common mode filter (81d).

## Description

### Technical field of the invention

The invention relates to the field of electronics and deals with battery chargers for electrical vehicles. More precisely, it pertains to rippple-noise reduction in a battery charger capable of operating with at least two different grid configurations.

### State of the art

The development of electrical vehicles (EVs) enables the utilization of clean energy and presents significant opportunities for delivering power back to the grid. Therefore, there has been an increase in the interest in bidirectional power flow solutions. Appropriate chargers are available on the marketplace, and there is an ongoing development to increase the power density, the efficiency, and the operational lifetime of the charger.

A specific problem with bidirectional chargers is their operational lifetime. Unidirectional chargers are used when the battery needs to be recharged. Bidirectional chargers should be used whenever the EV is left close to an electrical connection point, in order to take advantage of the bidirectional capability of the system. Unidirectional chargers are designed for a target lifetime of about 15 years, taking into account a certain variety of their conditions of use, in particular of the charging profile. Bidirectional chargers will have to meet the same lifetime expectation but will be used with a cumulated duration of use which is significantly higher due to the bidirectional current flow.

The seat of aging in battery chargers for electrical vehicles are the Mosfets, which are active components, and the chemical capacitors, which are passive components; the magnetic components do not exhibit significant aging. The lifetime of chemical power capacitors depends on temperature and is roughly of the order of 80 000 hours, which corresponds to about nine years. This may be insufficient for use in bidirectional chargers.

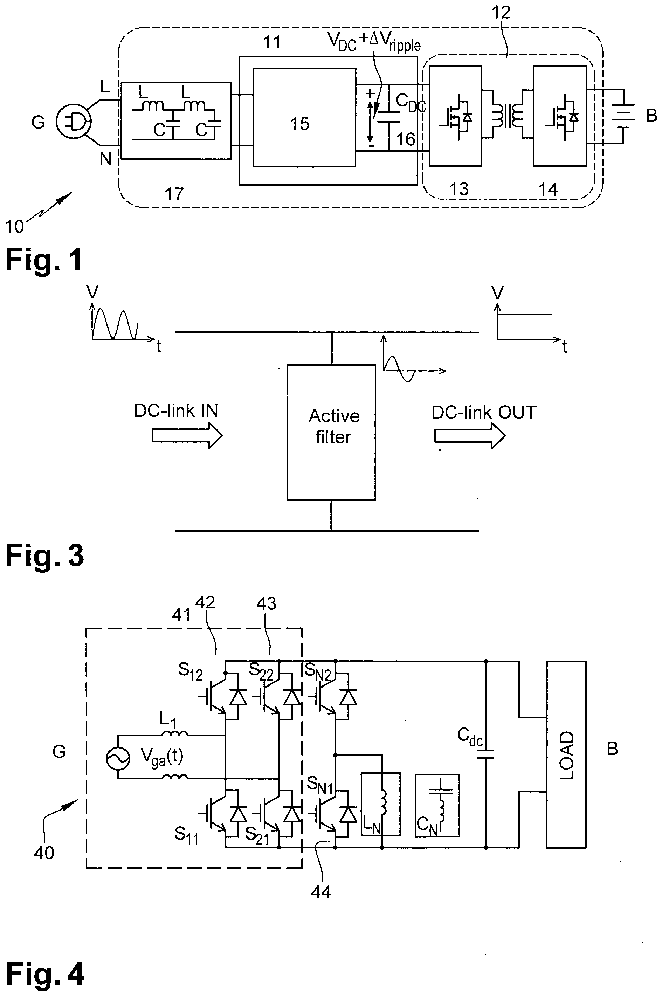

A typical bidirectional battery charger circuit is described in Figure 1 of reference [1] and reproduced here as Figure 1. The charger circuit 1 is connected between the grid G and a battery B. It consists essentially of a grid-tied power factor corrector (PFC) circuit 11, preceded by an EMI filter 10, and followed by an isolated DC/DC converter 12 (comprising two full bridges 13,14). The PFC circuit 11 is based on an AC/DC circuit 15, which ensures that a controllable DC voltage is provided and meets the harmonic requirements of the grid G. At the battery side B, an isolated DC/DC converter 12 is employed to regulate the voltage delivered to the battery B and to ensure galvanic isolation. According to prior art, a power bank DC-link capacitor 16 is needed to connect the PFC 11 to the DC/DC converter 12.

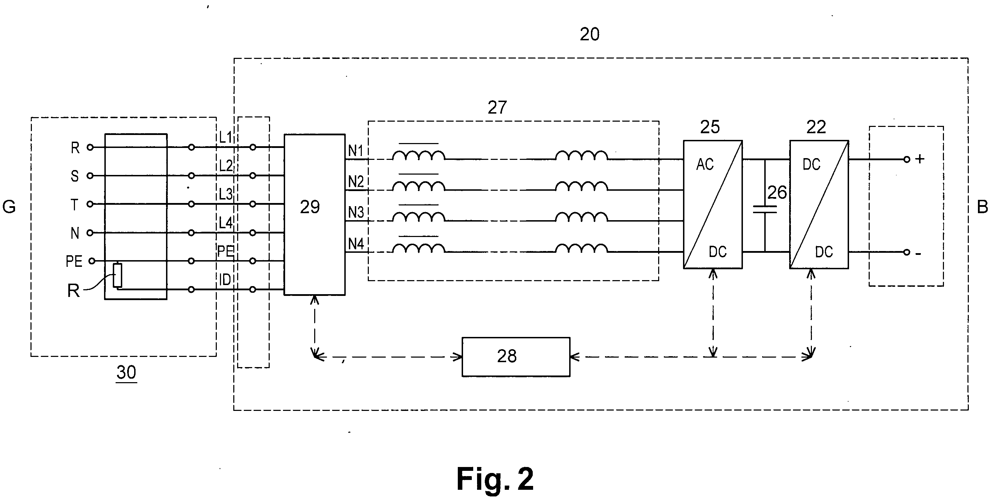

Another example is shown in EP 4 047 782 A1 (Watt & Well), reproduced here as Figure 2. The bidirectional charger circuit 20 also comprises an AC/DC rectifier 25 and an isolated DC/DC converter 22 separated by a DC link capacitor 26, said AC/DC rectifier 25 being preceded by a system of EMI-filters 27. This charger is a universal charger in the sense that it can be used for several different grid configurations. The charger shown on figure 2 has a four-phase configuration. A specific adapter 30 is used for connecting the charger circuit to the grid; this adapter comprises a resistance Re in parallel to the protective earth PE.

As described in EP 4 407 782 A1, this universal bidirectional charger 20 comprises an ID detection and reconfiguration system 29 comprising a set of switches, and a digital signal processor 28 comprising a microprocessor: the digital signal processor 28 identifies the configuration of the grid G by sensing the voltage signal derived from the protective earth PE via said resistance Re, and will then configurate the ID detection and reconfiguration system 29 (also called "configurator") by sending appropriate instructions to the switches of said configurator 29. This universal charger which adapts its configuration automatically to different grid configurations is particularly advantageous.

It is known that in single-phase chargers, there is an inherent power ripple component that pulses at twice the grid frequency (100Hz/120Hz). This ripple component may alter the functioning of the downstream device running on direct current and needs to be filtered out. Conventional techniques usually employ electrolytic capacitors to reduce this low-frequency ripple; in the circuits of figure 1 and figure 2 this is achieved by the DC-link capacitor 16, 26. This use of electrolytic capacitors compromises the reliability of the converter because the lifetime of electrolytic capacitors is rather short. Moreover, these capacitors are bulky; their use also increases cost and volume of the device. Therefore, this known solution alters reliability, efficiency and high power density.

More particularly, the relatively low lifetime of electrolytic capacitors (which usually does not exceed 20 000 hours, see reference [3]) is not in accordance with the goal of long lifetime needed for a bidirectional charger (~15 years), see reference [4].

The filtering of ripple voltage also represents a loss in efficiency of the device. It would be desirable to achieve a 99 % efficiency for the battery charger. However, due to the reduction of switching and conduction loss of wide bandgap transistors, the ripple loss dominates the conversion efficiency of the PFC converter: The power loss in PCF converter for a prototype 2.9 kW 240 Vac/60 Hz GaN Totem-Pole PCF converter with high electron mobility transistors has been estimated by Lee et al. (see reference [5]) as follows: Ripple loss 36-39%, inductors power loss 18-19%, conduction loss 17.5-19%, switching loss 8-10.5%, other auxiliary power loss 6-9%, EMI filter loss 5.5-6%, loss due to self-charge/discharge energy of the equivalent drain-to-source capacitance (Eqoss) 4-6%; these values depend on the output voltage.

Another problem with capacitors used in chargers for EVs is their bulkiness. As shown by Bak et al. [6], the volume distribution in a 3.3 kW prototype On-Board Charger is as follows: output capacitor 45.3 %, magnetics 26.5 %, EMI 19,5 %, relay 3.1 %, resonant capacitor 3 %, semiconductor 2.6 %. This shows that almost half of the total volume of the device is occupied by the electrolytic capacitors in the charger. Thus, to reduce the total volume, it is necessary to reduce their size.

And at last, but not at least, using electrolytic capacitors for filtering out ripple voltage leads to resistive energy loss.

It has been suggested that active filters can be used to absorb and release the power that is opposite in sign with respect to the ripple power that flows through the DC-link. The principle of an active power filter is shown on figure 3. As schematically shown in the V(t) diagrams in the upper part of figure 3, the input current (designated by "DC-link IN") entering the active filter has a strong ripple noise. The output current (designated by "DC-link OUT") has a negligible ripple noise.

As can be seen on figures 4 and 5 (taken from reference [7]) and on figure 6 (taken from reference [8]), prior art topologies using an Active Power Filter (APF) comprise a shared leg formed by a pair of switching devices. Said shared leg can be implemented on the AC side or on the DC side of the charger circuit. The APF further comprises an energy storage device in parallel with said shared leg; said energy storage device can be an inductance or a capacitor. Said inductance or capacitor can have a capacity much smaller than the electrolytic capacitors conventionally used for filtering ripple power. APF can include small film capacitors instead of a bulky, passive electrolytic capacitors. Low volume, high efficiency and high lifetime can be achieved in this way.

While the addition of a shared leg in parallel with an energy storage device allows to compensate for the sinusoidal ripple power leading to an almost constant output that will enter the battery, it requires nevertheless a significant modification of the circuitry, adding cost and volume for switching devices. This is especially complicated in universal chargers which require four phases.

The problem which is to be solved by the present invention is to propose a reliable and efficient ripple noise reduction in a universal battery charger with four phases (such as the bidirectional universal charger shown in EP 4 047 782 A1 and depicted on Figure 2), which does not add too much complexity to the circuit, and which avoids the use of electrolytic capacitors which are bulky, which have an energetic efficiency less than optimum, and which affect the lifetime of the charger.

### Object of the invention

The inventors have recognized that at least three phases (and preferably four phases) are needed for a universal charger, at least one of which phases is not used in single phase charging, bi-phase charging and three-phase without neutral charging. According to the invention, the problem is solved by providing a ripple-noise reduction circuit that uses the legs already present in the topology of the circuit and that are not used in a single-phase charging, bi-phase charging and three-phase without neutral charging configuration.

Said common mode filter can comprise an inductance and / or a capacitor, or a plurality of inductances and/or a plurality of capacitors. In particular, the common mode filter can be a common mode inductance; this is a preferred embodiment. The common mode filter can be a common mode capacitor.

Said differential mode filter can comprise an inductance and / or a capacitor, or a plurality of inductances and/or a plurality of capacitors. In particular, the differential mode filter can be a differential mode inductance; this is a preferred embodiment. The differential mode filter can be a differential mode capacitor.

Said legs comprise at least two switching devices in series. It can comprise more than two switching devices, and can comprise so-called main switching devices and supplementary switching devices; the latter can be of the same kind as the main switching devices. The supplementary switching devices can be in parallel with at last one of the two main switching devices.

Said ripple-noise reduction circuit is activated by an additional switch which can connect the leg which is not used in the charging operation in parallel with the differential mode filter of said unused leg and with a filter capacitor in series with said differential mode filter.

A first object of the invention is a charger for charging the battery of an electric vehicle from the grid, said charger being configured for being operated in at least two configurations for charging said battery from the grid, said configurations being selected from single phase configuration, bi-phase configuration, three phase configuration with neutral and three-phase configuration without neutral, said charger comprising
- a first connector unit for connecting the charger to the grid,
- an AC/DC converter, comprising three or four legs, each leg comprising at least two switching devices in series, each leg being connected to a different phase line or neutral line originating from the grid side of said first connector,
- a set of filters provided between said first connector unit and said AD/DC converter, said set of filters comprising, for each phase line and for the neutral line, at least a differential mode filter and a common mode filter,
- a second connector unit for connecting the charger to the battery,
said charger being characterized in that it further comprises an additional switchS and a filter capacitor C_{AF}, said additional switch being configured to be capable of switching between two positions, namely
- a first position wherein said filter capacitor C_{AF} is put in series with the differential mode filter connected to a leg which is not used in the configured charger operation,
- a second position wherein said filter capacitor C_{AF} is disconnected from said common mode filter.

In specific embodiments which may be combined with each other:
- Said charger can comprise four legs.
- Each leg can comprise two switching devices S_{N1},S_{N2} in series.
- Said charger can further comprise a configurator provided with a set of switches and/or relays capable of switching at least between a three-phase operation and a single-phase operation for charging said battery from the grid, said configurator being provided between said first connector unit and said first set of filters.
- Said charger is configured such that said first position of said additional switch can be selected when the battery charger is configured to single-phase operation or to bi-phase operation or to three phase operation without neutral, and said second position of said additional switch can be selected when the charger is configured to three phase operation with neutral.
- Said charger can comprise two sets of an additional switch S1,S2 and a filter capacitor C_{AF1}, C_{AF2}, each of said additional switches S1,S2 being configured to be capable of switching between two positions, namely a first position wherein said filter capacitor C_{AF} is put in series with the differential mode filter connected to a leg which is not used in the configured charger operation, and a second position wherein said filter capacitor C_{AF} is disconnected from said common mode filter.

A second object of the invention is a method for reduction of ripple noise in a charger for charging the battery of an electric vehicle from the grid, said charger being configured for being operated in at least two configurations for charging said battery from the grid, said configurations being selected from single phase configuration, bi-phase configuration, three phase configuration with neutral and three-phase configuration without neutral, said charger comprising
- a first connector unit for connecting the charger to the grid,
- an AC/DC converter, comprising three or four legs, each leg comprising at least two switching devices in series, each leg being connected to a different phase line or neutral line originating from the grid side of said first connector,
- a set of filters provided between said first connector unit and said AC/DC converter, said set of filters comprising, for each phase line and for the neutral line, at least a differential mode filter and a common mode filter,
- a second connector unit for connecting the charger to the battery,

said charger being characterized in that it further comprises an additional switch and a filter capacitor C_{AF}, said additional switch being configured to be capable of switching between two positions, namely
   - a first position wherein said filter capacitor C_{AF} is put in series with the differential mode filter connected to a leg which is not used in the configured charger operation,
   - a second position wherein said filter capacitor C_{AF} is disconnected from said common mode filter,
said method comprising a step of activating said ripple noise reduction by putting said additional switch in said first position.

In an advantageous embodiment, said ripple noise reduction is activated when the average amplitude ΔV_{R1} of said ripple noise exceeds a threshold value V_{T} said threshold value V_{T} being preferably defined as a percentage of the mean voltage V_{DC} at the putput of said AC/DC converter. V_{T} can be comprised between 3 % and 7 %, and preferably between 4 % and 6 %.

### Brief description of the figures

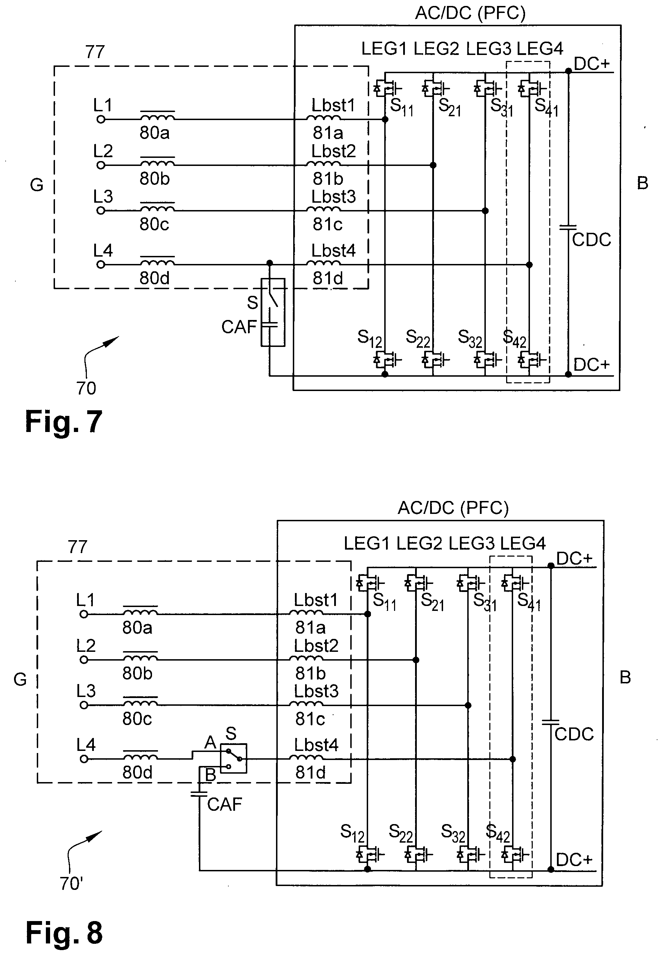

Figures 1 to 6 illustrate prior art. Figures 7 to 16 illustrate various aspects of the invention. They are not meant to limit the scope of the invention.
Figure 1 schematically illustrates a bidirectional charger circuit according to prior art.
Figure 2 schematically illustrates a bidirectional universal charger according to prior art, which can be adapted such as to implement the present invention.
Figure 3 illustrates the principle of an active power filter for eliminating ripple noise.
Figure 4 illustrates a prior art circuit with active power filter.

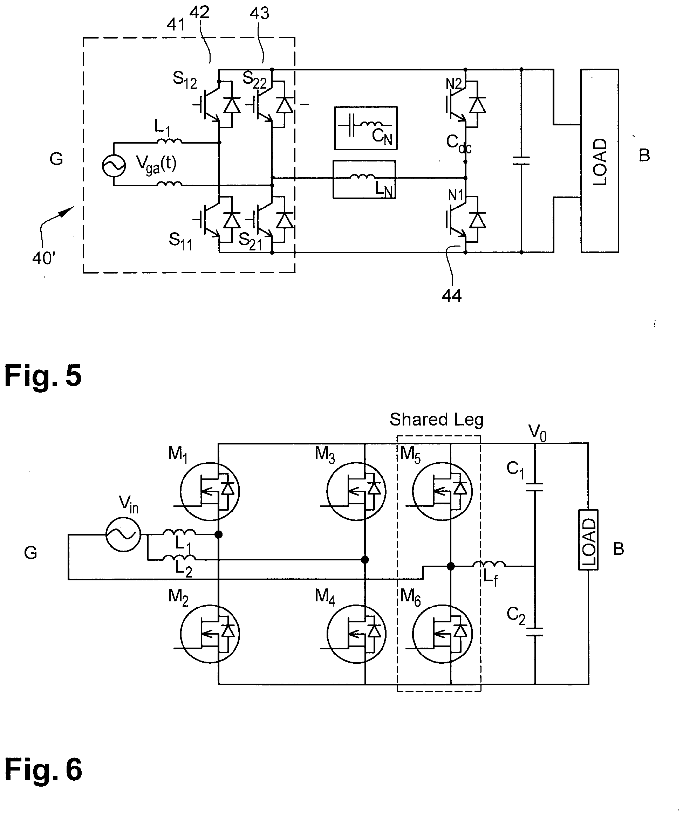

Figure 5 illustrates another prior art circuit with active power filter.
Figure 6 illustrates another prior art circuit with active power filter.
Figures 7 to 12 illustrate various aspects of a first embodiment of the invention.
Figure 7 schematically illustrates a first variant of a first embodiment of the invention.
Figure 8 schematically illustrates a second variant of said first embodiment of the invention.

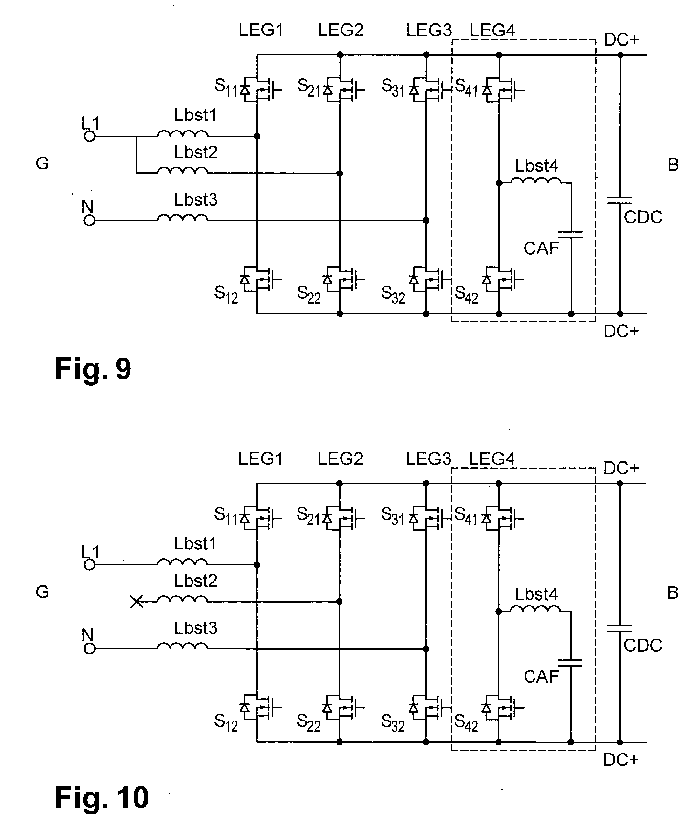

Figure 9 schematically illustrates the equivalent circuit of figure 7 in case of single-phase operation with 2P/3 charging configuration.
Figure 10 schematically illustrates the equivalent circuit of figure 7 in case of single-phase operation with P/3 charging configuration.

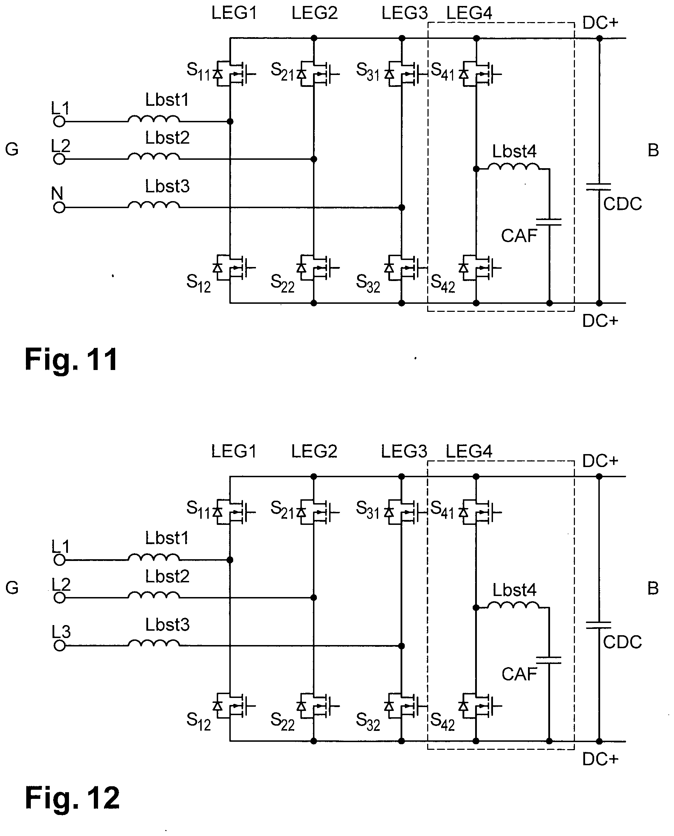

Figure 11 schematically illustrates the equivalent circuit of figure 7 in case of bi-phase operation.
Figure 12 schematically illustrates the equivalent circuit of figure 7 in case of three-phase operation without neutral.

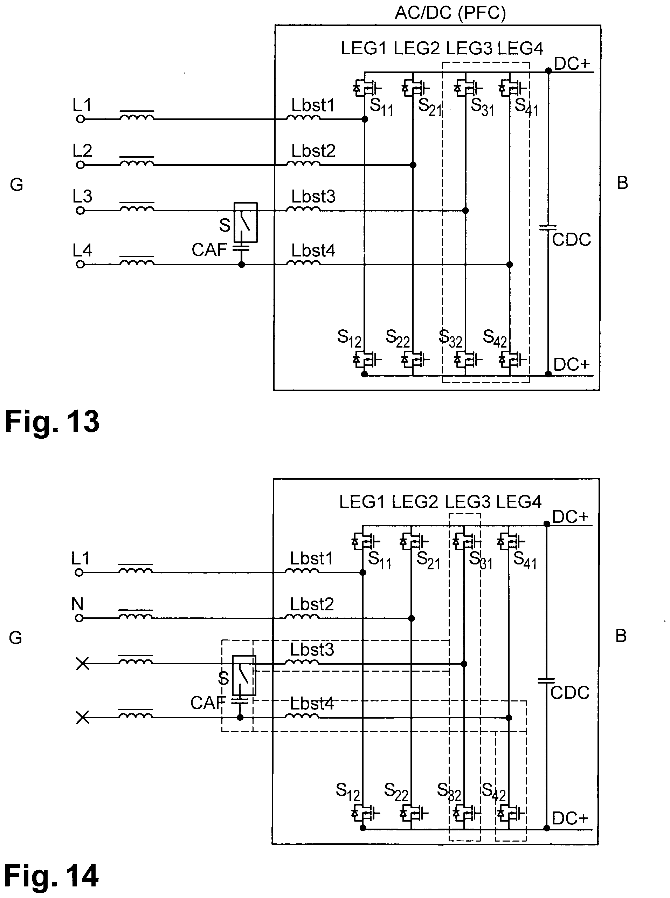

Figures 13 and 14 illustrate various aspects of a second embodiment of the invention.
Figure 13 schematically illustrates a second embodiment of the invention in case of P/3 single-phase configuration.
Figure 14 schematically illustrates the equivalent circuit of figure 13.

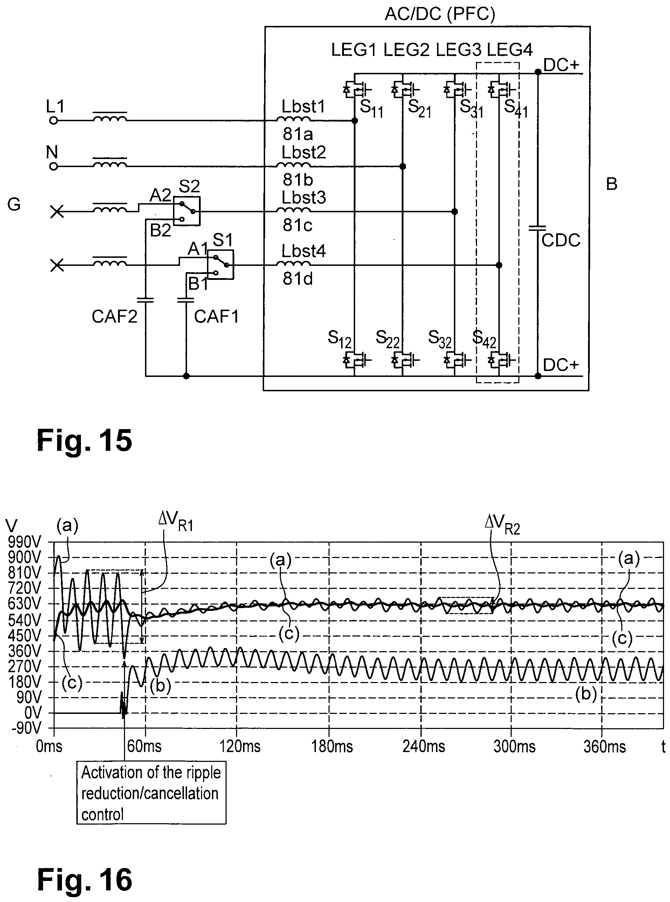

Figure 15 schematically illustrates a third embodiment of the invention in which two unused legs are used for ripple noise cancellation.
Figure 16 shows the DC bus voltage before and after the activation of the ripple reduction / cancellation control according to the invention.

The following reference symbols are used:

| | |
|---|---|
| Letters: | B = Battery; C = Capacitor; F = Connector; G = Grid; L = Inductance; M = Switch (Mosfet); N = Neutral; PE = Protective Earth; V = Voltage |

### Numerals:

| | | | |
|---|---|---|---|
| 10 | Bidirectional battery charger circuit according to prior art (figure 1) | | |
| 11 | PFC (Power Factor Corrector) circuit | 12 | Isolated DC/DC Converter |
| 13,14 | Full bridges of 12 | 15 | AD/DC circuit |
| 16 | DC link capacitor | 17 | EMI filter |
| 20 | Bidirectional battery charger circuit according to prior art (figure 2) | | |
| 22 | Isolated DC/DC converter | | |
| 25 | Bridgeless AC/DC converter according to prior art | | |
| 26 | DC link capacitor capacitor | 27 | Set of EMI filters |
| 28 | Digital signal processor | | |
| 29 | ID detection and reconfiguration system | 30 | Adapter to grid |
| 40 | Charger circuit according to prior art (figures 4 and 5) | | |
| 41 | Full bridge | 42,43 | Legs |
| 44 | Shared leg | 45 | Midpoint of shared leg 44 |
| 70,70' | Circuit according to the invention | 75 | AC/DC converter |
| 77 | Set of EMI filters | 80 | Common mode filter |
| 81 | Differential mode filter | | |
| 81 | Differential inductance | | |

### Description of the invention

As explained above in relation with figure 1, prior art battery charger circuit use PFC 11 with passive electrolytic capacitors 16 (so-called DC link capacitor) to filter and reduce voltage ripple ΔV_{R}. Alternatively, they use active power filter (APF) topologies in which a pair of switches is added to the PCF, as shown on figures 4, 5 and 6. The APF is used to store and supply the power to maintain the DC bus voltage V_{DC} constant. The AFP can be implemented on the DC side (see Figure 4) or on the AC side (see Figures 5 and 6). An energy storage device such as an inductance and/or a capacitor is connected to both switches, preferably at midpoint (as in figure 6).

The circuit 40 of figures 4 and 5 comprises a full bridge 41 with two legs 42,43 comprising each a pair of switching circuits S₁₂,S₂₂; S₂₁,S₂₂. Furthermore, it comprises a third, shared leg 44 comprising a high side switching ciucuit S_{N1} and a low-side switching circuit S_{N1}. It also comprises at least one energy storage device in series, which is connected to the shared leg 44, preferably at midpoint 45 as in figure 4.

As shown in figures 4 and 5, said energy storage device can be an inductor L_{N} or a capacitance C_{N} (in these figures, the component L_{N} can be replaced by the component C_{N}).

This circuit still needs a capacitance C_{dc} in series at the battery side, but this capacitance can be much smaller than in prior art circuits, and the use of electrolytic capacitors can be avoided.

According to another prior art embodiment, for the AFP implemented of the AC side it is possible to use an AFP shared converter topology (see Figure 6). The number of components used in the circuit is minimized due to this.

The present inventors have found that the use of such an additional shared leg is not necessary in the prior art circuit of figure 2. This circuit of a universal and versatile bidirectional battery charger is designed to be able to adapt itself to various grid configurations and can in particular be connected to three phase grids and to single phase grids. According to the invention, the leg(s) that is (are) not used during single-phase or biphase operation can be reconfigured to act as an active power filter. This reconfiguration requires the addition of a switch and of an energy storage unit, as will be explained below in relation with figures 7 to 14. These figures refer to circuits which can be configured in the universal bidirectional charger of figure 2.

The ripple energy can be stored in an energy storage unit. One or more inductors can be used as an energy storage unit. As a first alternative, one or more capacitors can be used as an energy storage unit. As a second alternative, the energy storage unit can comprise one or more inductors and one or more capacitors. In the examples given in figures 7 to 14, the energy storage unit is a filter capacitor C_{AF} which is added to the prior art circuit of figure 2.

Figures 7 and 8 show a first embodiment of the invention. The circuit 70,70' represents part of the power stage but does not show the DC/DC stage on the battery side B, which is necessary for the circuit 70,70' to function in a battery charger. Circuit 70,70' is based on an extract of the circuit of figure 2 which has been modified according to the present invention. It comprises four connections to phases, labelled L1,L2,L3,L4, a set of EMI filters 77 comprising in each branch L1,L2,L3,L4 a common mode filter 80a,80b,80c,80d and a differential inductance 81a,81b,81c,81d mounted in series. It furthermore comprises an AC/DC converter 75 comprising four legs labelled Leg1,Leg2,Leg3,Leg4, each of said legs comprising a half bridge with two switching devices in series. Said switching devices are usually mosfets.

According to a first embodiment of the invention shown on figures 7 and 8, the unused boost inductor 81d in the power transfer (labelled Lbst4 in figure 7 and figure 8) and the active filter capacitor C_{AF} are used as an active power filter. As seen on these figures, a switch or relay S is added to the circuit. Figures 7 and 8 show two variants for connecting this switch.

In a first variant shown on figure 7, the switch S is in parallel with the unused boost choke inductor Lbst4 and has an open position and a closed position. In this first variant, the filter capacitor C_{AF} is in series with the switch S when said switch S is closed.

In a second variant shown on figure 8, the switch S is in series with the unused boost choke inductor Lbst4, and has two connecting positions A and B.

In each of these two variants, one of the two switch positions ("closed" in figure 7, position B in figure 8) of switch S allows the use of the leg Leg4 as a ripple noise cancellation leg, while said leg is unused for the charger unit. In each of these two variants, the other of the two switch positions ("open" in figure 4, position A in figure 8) allows to use this leg for the battery charger in the usual way.

The position of switch S depends on the grid configuration. Figures 9 to 12 show the equivalent circuits of figure 4 for different grid configurations. In order to achieve ripple noise cancellation, during single-phase operation (see figure 9 and figure 10), bi-phase operation (see Figure 11) or three-phase operation without neutral (see figure 12) charging operation, switch S is closed (variant 1) or switched to position "B" (variant 2) and the leg L4 along with the boost choke Lbst4 and the filter capacitor C_{AF} operates as an active filter for ripple reduction/cancellation. Filter capacitor C_{AF} is then in series with switch S.

The equivalent circuit of figure 9 applies to the topology of figure 8 if switch S is in position B.

When not in use for ripple noise reduction, or in three-phase operation with neutral, switch S is open (option 1) or in position A (option 2). Ripple noise reduction is not required in three-phase operation with neutral.

According to a second embodiment of the invention shown on figure 13, the unused boost inductors in the power transfer (labelled Lbst3 and Lbst4 in figures 13 and 14) and the active filter capacitor C_{AF} are used as an active power filter. As seen on these figures, a switch or relay S is added to the circuit in parallel between phases L3 and L4. Only in case of P/3 single-phase operation, switch S is closed and the low side mosfet of leg Leg4 is always on, leading to the equivalent circuit shown in Figure 14.

It is also possible that two or more unused legs are used as active filters. They can be placed in parallel in order to sum up the contribution of each leg. This represents a third embodiment of the present invention and is illustrated in Figure 15. The circuit comprises two switches S1,S2, each of which has a position A and a position B. In position B1 switch S1 is in series with its filter capacitor C_{AF1}, and in position B2 switch S2 is in series with its filter capacitor C_{AF2}. Any of the two legs can be used for ripple noise reduction, of both can be used in parallel when two legs are unused (namely when the charger operates in single phase configuation).

When not in use for ripple noise reduction, or in a configuration for three-phase operation with neutral, switches S1, S2 are in position A1,A2, respectively.

Figure 16 shows the DC bus voltage V_{DC} (this is the charging voltage measured at the capacitor C_{DC}) before and after the activation of the ripple reduction / cancellation control according to the invention for a circuit according to a topology according to figures 10 and 11. Curve (a) shows the voltage across the C_{DC} capacitor, which is the sum V_{DC} + V_{R}. Curve (b) shows the voltage across the C_{AF} capacitor. As can be seen from the figure, before switching on the ripple reduction control (i.e. before actioning switch S such as to connect the unused leg, thereby making it act as an active power filter together with the filter capacitor C_{AP} which is in series with said switch S) the average amplitude of ripple noise ΔV_{R1} is of the order of about 450 V, while after switching on the ripple reduction control, this amplitude ΔV_{R2} is less than about 90 V. The fluctuation of the mean voltage (curve (c)) decreases from about 90 V to less than about 10 V.

The principle of operation will be described here in further detail, and this will highlight certain advantages of the invention.

According to the invention, the control of the active filter is independent to the one of the single-phase PWM rectifier. This allows independent controls, which is preferable. It also allows to turn off the filter when the charger is working in three phase configuration, or for any other reasons; this will be explained below in more detail.

The active filter has two working modes depending on the current that flows through the DC-link, a buck and a boost mode. In the buck mode, where the current is above the average value, the filter lowers down the voltage from the DC-link value to the target value and absorbs the ripple power from the DC link charging the active filter capacitor.

In the boost mode, when the current is under the average value, it boosts up the voltage of the capacitor to the voltage of the DC-link and injects current and releasing the energy stored in the capacitor. Doing this, the ripple power that comes from the rectifier is completely compensated by the active filter with a very high efficiency.

The only losses that the active filter has are represented by the switching and conduction losses of the mosfets and the losses related to the equivalent series resistance of the capacitor and inductor.

Another advantage of the active filter is that the filter's capacitor is independent from the DC link voltage. This means that is possible to charge and discharge the capacitor in a more efficient way taking advantage of the full capacity.

As mentioned above, the filter capacitor C_{AF} can be much smaller than conventional DC link capacitors.

As mentioned above, the active filter can be turned on and off when needed, by putting switch S or switches S1,S2 in the appropriate configuration. In an advantageous method according to the invention, when the charger is configured to charge a battery B from the grid G, the active filter is activated when the average amplitude of ripple noise ΔV_{R1} exceeds a certain threshold value V_{T}. In an advantageous embodiment, said threshold value V_{T} can be set to a certain percentage of the mean voltage V_{DC}. Knowing that even an active filter according to the invention will encounter some losses, it may be advantageous to inactivate the active filter when operating under conditions where the ripple noise is very small.

As an example, V_{T} can be of the order of 10 %, or preferably of the order of 7 %, or even less than 7 %, such as 6 %, 5 %, 4 % or 3 % or even 2 %. A threshold value of about 5 % is ,preferred. The ripple noise of a battery charger increases with increasing power P that is delivered by the charger to the battery and decreases with increasing voltage V_{DC} delivered by the AC/DC converter. As a consequence, when the power P delivered by the battery charger is low (for example a few hundreds of Watt or less) the ripple noise is weak and may drop below a value of about 5 %. Likewise, when the charging voltage V_{DC} (measured at the capacitor C_{DC}) is very high (for instance of the order of about 800 V) the ripple noise may drop below a value of about 5 %. This is illustrated in Table 1 below which shows typical data for typical charging situations.

**Table 1**

| Ripple noise ΔV_{R1} for a typical charger according to the invention (grid frequency F_{G} = 50 Hz, grid rms voltage V_{G} = 230 V, capacitance C_{DC} = 300 µF) operated under different conditions | | | |
|---|---|---|---|
| Iᵣₘₛ [A] | P [W] | VDC [V] | ΔV_{R1} [%] |
| 1.0 | 230 | 400 | 1.53 |
| 3.5 | 805 | 400 | 5.34 |
| 3.5 | 805 | 800 | 1.33 |
| 13 | 2990 | 800 | 4.96 |

The active filter can be used also in the battery-to-grid or battery-to-load configurations, and in each of these two cases the same value or a different value for V_{T} can be used for switching on or off the active ripple noise filter, as may be required by the use of the output current or as may be advantageous for reducing energy loss due to active ripple noise reduction.

The invention has many advantages. Applied to the topology of figure 2, no additional power switching device (mosfet) is necessary, but only an additional switch S and a small energy storage unit. The energy storage unit can be, or can comprise, a rather small capacitor. Said capacitor need not be an electrolytic capacitor but can be a film capacitor, for example, which is of small size and which presents a longer lifetime than electrolytic capacitors. The charger according to the invention is more energy-efficient than prior art chargers.

### Bibliographic references:

[1] A. Kazemtarghi, A. Chandwani, N. Ishraq and A. Mallik, "Active Compensation-Based Harmonic Reduction Technique to Mitigate Power Quality Impacts of EV Charging Systems",in IEEE Transactions on Transportation Electrification, vol. 9, no. 1, pp. 1629-1640, March 2023, doi: 10.1109/TTE.2022.3183478.
[2] Z. Liu, F. C. Lee, Q. Li and Y. Yang, "Design of GaN-Based MHz Totem-Pole PFC Rectifier", in IEEE Journal of Emerging and Selected Topics in Power Electronics, vol. 4, no. 3, pp. 799-807, Sept. 2016, doi: 10.1109/JESTPE.2016.2571299.
[3] B. Karanayil, V. G. Agelidis and J. Pou, "Performance Evaluation of Three-Phase Grid-Connected Photovoltaic Inverters Using Electrolytic or Polypropylene Film Capacitors", in IEEE Transactions on Sustainable Energy, vol. 5, no. 4, pp. 1297-1306, Oct. 2014, doi: 10.1109/TSTE.2014.2347967.
[4] H. Wang and F. Blaabjerg, "Reliability of Capacitors for DC-Link Applications in Power Electronic Converters-An Overview", in IEEE Transactions on Industry Applications, vol. 50, no. 5, pp. 3569-3578, Sept.-Oct. 2014, doi: 10.1109/TIA.2014.2308357
[5] J. -Y. Lee, J. -H. Chen and K. -Y. Lo, "Design of a GaN Totem-Pole PFC Converter Using DC-Link Voltage Control Strategy for Data Center Applications", in IEEE Access, vol. 10, pp. 50278-50287, 2022, doi: 10.1 109/ACCESS.2022.3173606.
[6] J.Baek, M.-H.Park, T.Kim, H.-S.Youn, "Modified Power Factor Correction (PFC) Control and Printed Circuit Board (PCB) Design for High-Efficiency and High-Power Density On-Board Charger", January 2021, doi:10.3390/en14030605
[7] H. Zhao, Y. Shen, W. Ying, S. S. Ghosh, M. R. Ahmed and T. Long, "A Single- and Three-Phase Grid Compatible Converter for Electric Vehicle On-Board Chargers", in IEEE Transactions on Power Electronics, vol. 35, no. 7, pp. 7545-7562, July 2020, doi: 10.1109/TPEL.2019.2956653.
[8] S. Saha and S. K. Singh, "Restricted interleaving phenomenon in Interleaved Boost PFC with leg sharing APF circuit", 2022 IEEE International Conference on Power Electronics, Drives and Energy Systems (PEDES), Jaipur, India, 2022, pp. 1-6, doi: 10.1109/PEDES56012.2022.10080500.
[9] J. Sun, L. Zhu, R. Qin, J. Li, D. J. Costinett and L. M. Tolbert, "GaN-Based T-Type Totem-Pole Rectifier with ZVS Control and Reactive Power Regulation", 2022 IEEE Energy Conversion Congress and Exposition (ECCE), Detroit, MI, USA, 2022, pp. 01-08, doi: 10.1109/ECCE50734.2022.9947608.
[10] J.-Y. Lee, J.-H. Chen, K.-Y. Lo, "Design of a GaN Totem-Pole PFC Converter Using DC-Link Voltage Control Strategy for Data Center Applications", IEEE Access, 10, pp. 50278-50287 (2022), doi: 10.1109/ACCESS.2022.3173606
[11] J. Baek, M.-H. Park, T. Kim, H.-S. Youn, "Modified Power Factor Correction (PFC) Control and Printed Circuit Board (PCB) Design for High-Efficiency and High-Power Density On-Board Charger", Energies 2021, 14, 605, doi.org: 10.3390/en14030605

## Claims

1. A charger for charging the battery (B) of an electric vehicle from the grid (G), said charger being configured for being operated in at least two configurations for charging said battery from the grid G, said configurations being selected from single phase configuration, bi-phase configuration, three phase configuration with neutral and three-phase configuration without neutral, said charger comprising
- a first connector unit for connecting the charger to the grid (G),
- an AC/DC converter (75), comprising three or four legs, each leg comprising at least two switching devices in series, each leg being connected to a different phase line or neutral line originating from the grid side of said first connector,
- a set of filters (77) provided between said first connector unit and said AC/DC converter, said set of filters comprising, for each phase line and for the neutral line, at least a differential mode filter (81) and a common mode filter (80),
- a second connector unit for connecting the charger to the battery (B),
said charger being **characterized in that** it further comprises an additional switch (S) and a filter capacitor C_{AF}, said additional switch being configured to be capable of switching between two positions, namely
- a first position wherein said filter capacitor (C_{AF}) is put in series with the differential mode filter (81d) connected to a leg which is not used in the configured charger operation,
- a second position wherein said filter capacitor (C_{AF}) is disconnected from said common mode filter (81d).

2. A charger according to claim 1, comprising four legs.

3. A charger according to claims 1 or 2, **characterized in that** each leg comprises two switching devices (S_{N1},S_{N2}) in series.

4. A charger according to any of claims 1 to 3, further comprising a configurator provided with a set of switches and/or relays capable of switching at least between a three-phase operation and a single-phase operation for charging said battery from the grid, said configurator being provided between said first connector unit and said first set of filters.

5. A charger according to any of claims 1 to 4, **characterized in that** said first position of said additional switch can be selected when the battery charger is configured to single-phase operation or to bi-phase operation or to three phase operation without neutral, and said second position of said additional switch can be selected when the charger is configured to three phase operation with neutral.

6. A charger according to any of claims 1 to 5, **characterized in that** it comprises two sets of an additional switch (S1,S2) and a filter capacitor (C_{AF1}, C_{AF2}), each of said additional switches (S1,S2) being configured to be capable of switching between two positions, namely- a first position wherein said filter capacitor (C_{AF}) is put in series with the differential mode filter (81c,81d) connected to a leg which is not used in the configured charger operation,
- a second position wherein said filter capacitor (C_{AF}) is disconnected from said common mode filter (81c,81d).

7. A charger according to any of claims 1 to 6, **characterized in that** it is configured for being operated in any configuration selected from single phase configuration, bi-phase configuration, three phase configuration with neutral and three-phase configuration without neutral.

8. A charger according to claim 7, **characterized in that** it comprises a configurator provided with a set of switches and/or relays capable of switching between any of said configurations for charging said battery from the grid, said configurator being provided between said first connector unit and said first set of filters.

9. A charger according to claim 8, **characterized in that** said configurator is provided with a detection system configured to detect the grid configuration, and in particular to identify a single-phase grid configuration and a three-phase grid configuration, and preferably also a. two-phase grid configuration and a four-phase grid configuration.

10. A method for reduction of ripple noise in a charger for charging the battery (B) of an electric vehicle from the grid (G), said charger being configured for being operated in at least two configurations for charging said battery from the grid G, said configurations being selected from single phase configuration, bi-phase configuration, three phase configuration with neutral and three-phase configuration without neutral, said charger comprising
- a first connector unit for connecting the charger to the grid (G),
- an AC/DC converter (75), comprising three or four legs, each leg comprising at least two switching devices in series, each leg being connected to a different phase line or neutral line originating from the grid side of said first connector,
- a set of filters (77) provided between said first connector unit and said AD/AC converter, said set of filters comprising, for each phase line and for the neutral line, at least a differential mode filter (81) and a common mode filter (80),
- a second connector unit for connecting the charger to the battery (B),
said charger being **characterized in that** it further comprises an additional switch (S) and a filter capacitor C_{AF}, said additional switch being configured to be capable of switching between two positions, namely
- a first position wherein said filter capacitor (C_{AF}) is put in series with the differential mode filter (81d) connected to a leg which is not used in the configured charger operation,
- a second position wherein said filter capacitor (C_{AF}) is disconnected from said common mode filter (81d),
said method comprising a step of activating said ripple noise reduction by putting said additional switch in said first position.

11. A method for reduction of ripple noise according to claim 10, wherein said ripple noise reduction is activated when the average amplitude ΔV_{R1} of said ripple noise exceeds a threshold value V_{T} said threshold value V_{T} being preferably defined as a percentage of the mean voltage V_{DC} at the output of said AC/DC converter.

12. A method according to claim 11, wherein V_{T} is comprised between 3 % and 7 %, and preferably between 4 % and 6 %.
